# EUROPÄISCHE PATENTSCHRIFT

(11) **EP 4 357 967 B1**
(45) Veröffentlichungstag und Bekanntmachung des Hinweises auf die Patenterteilung: **04.09.2024**
(21) Anmeldenummer: 22203117.1
(22) Anmeldetag: 21.10.2022
(51) Int. Cl.: G06K 7/10

(54) **OPTOELEKTRONISCHER SENSOR ZUR ERFASSUNG VON OBJEKTEN IN EINEM ERFASSUNGSBEREICH UND VERFAHREN ZUM HERVORHEBEN DER LAGE EINES ERFASSUNGSBEREICHS**
OPTOELECTRONIC SENSOR FOR DETECTING OBJECTS IN A DETECTION REGION AND METHOD FOR HIGHLIGHTING THE POSITION OF A DETECTION REGION
CAPTEUR OPTOÉLECTRONIQUE DESTINÉ À LA DÉTECTION D'OBJETS DANS UNE ZONE DE DÉTECTION ET PROCÉDÉ DESTINÉ À LA MISE EN ÉVIDENCE DE LA POSITION D'UNE ZONE DE DÉTECTION

(43) Veröffentlichungstag der Anmeldung: 24.04.2024
(73) Patentinhaber: SICK AG, 79183 Waldkirch (DE)
(72) Erfinder: Reichenbach, Jürgen, Emmendingen (DE); Behrens, Andreas, Emmendingen (DE)

(56) Entgegenhaltungen:
- EP-A1- 2 136 248
- DE-A1- 102017 103 892
- US-A1- 2019 104 241

## Beschreibung

Die Erfindung betrifft einen optoelektronischen Sensor zur Erfassung von Objekten in einem Erfassungsbereich und ein Verfahren zum Hervorheben der Lage eines Erfassungsbereichs nach dem Oberbegriff von Anspruch 1 beziehungsweise 11.

Es ist in zahlreichen Anwendungen nützlich, den Erfassungsbereich eines optoelektronischen Sensors visuell wahrnehmbar zu machen. Ein Beispiel unter vielen ist das Lesefeld eines Codelesers. Bei einer manuellen Lesung kann so der zu lesende Code in die richtige Position gebracht werden. In einem Lesetunnel, der Objekte durch das Lesefeld fördert, wird die Einrichtungsphase unterstützt. Eine Anzeigeeinrichtung zur Visualisierung des Erfassungsbereichs wird auch als Zieleinrichtung (Aiming) bezeichnet, weil damit die Ausrichtung des Sensors nachvollzogen werden kann. Zum Hervorheben des Erfassungsbereichs kann ein einzelner Laserpunkt genügen, der das Zentrum bezeichnet, es werden aber auch komplexere Muster verwendet. Im eigentlichen Betrieb, beispielsweise während der Bildaufnahme einer Kamera, wird die Zieleinrichtung üblicherweise ausgeschaltet, um Störungen zu vermeiden.

Die Umgebung der optischen Achse des Sensors wird für den Lichtempfang benötigt, beispielsweise für ein Objektiv und einen Kamerachip. Deshalb können Lichtquellen der Zieleinrichtung nur außeraxial angebracht werden. Das allerdings hat zur Konsequenz, dass die Visualisierung des Erfassungsbereichs nur auf einen bestimmten Abstand eingestellt werden kann, beispielsweise den Fokusabstand. In davon abweichenden Abständen entsteht ein seitlicher Versatz des Lichtpunktes oder Lichtmusters.

Die EP 2 136 248 A1 offenbart eine Bildaufnahmevorrichtung mit anpassbarer Beleuchtung, nämlich einer Objektbeleuchtung und/oder einer Positionierbeleuchtung. Eine Verstellung der Fokussierung der Empfangsoptik bewirkt automatisch die Anpassung der Objekt- und/oder Positionierbeleuchtung an die verstellte Fokussierung. Somit ist dies ein Beispiel einer Zieleinrichtung, die auf den Fokusabstand eingestellt ist, denn genau dort ergibt sich eine Überlagerung der projizierten Lichtmuster.

In der DE 10 2017 103 892 A1 wird ein Abbildung-Lesegerät beschrieben, das zwei zueinander beabstandete Zielausrichtungs-Lichtanordnungen aufweist. Sie erzeugen zwei kollineare Zielausrichtungslinien, die einander auf dem zu visualisierenden Ziel überlappen und dieses durch einen zentralen Linienabschnitt größere Helligkeit hervorheben.

Die WO 2009/007772 A2 befasst sich mit einem Kamerasystem, das eine leuchtende Referenzfigur auf die Erfassungsebene projiziert, wobei die Fokussierung der Kamera und der Referenzfigur einander entsprechen. Auch hier ist folglich der Fokusabstand ausgewählt, in anderen Abständen kann die Referenzfigur jedenfalls für keine optimale Visualisierung sorgen.

Die noch unveröffentlichte europäische Patentanmeldung mit dem Aktenzeichen 22185480.5 beschreibt eine Codelesevorrichtung mit Fokusverstellung und einer Rückmeldung über die Güte der aktuell eingestellten Fokuslage. Das kann über ein Lichtsignal oder Lichtmuster erfolgen, das eine Anzeigeeinrichtung auf den optischen Code projiziert. Das ist ein weiteres Beispiel für die Bindung an den Fokusabstand.

Es ist daher Aufgabe der Erfindung, eine Anzeigeeinrichtung eines optoelektronischen Sensors zum Visualisieren des Erfassungsbereichs weiter zu verbessern.

Diese Aufgabe wird durch einen optoelektronischen Sensor zur Erfassung von Objekten in einem Erfassungsbereich und ein Verfahren zum Hervorheben der Lage eines Erfassungsbereichs nach Anspruch 1 beziehungsweise 11 gelöst. Erfassung eines Objekts kann hier beispielsweise bedeuten, eine Eigenschaft des Objekts wie dessen Abstand zu bestimmen, ein Bild des Objekts beziehungsweise einer Szenerie mit dem Objekt aufzunehmen, einen optischen Code zu lesen und dergleichen. Auf ein Lichtempfangselement fällt Licht aus dem Erfassungsbereich und wird in ein Empfangssignal gewandelt, insbesondere um Bilddaten zu erzeugen. Eine Anzeigeeinrichtung macht den Erfassungsbereich für das menschliche Auge mittels eines projizierten Lichtmusters sichtbar. Die Anzeigeeinrichtung ist bevorzugt als Zieleinrichtung zum Ausrichten des optoelektronischen Sensors ausgebildet. Durch das visuelle Feedback kann die Ausrichtung geprüft und nachjustiert werden. Eine Steuer- und Auswertungseinheit wertet das Empfangssignal beziehungsweise die Bilddaten aus. Dies kann intern in dem optoelektronischen Sensor, extern in einer daran angeschlossenen Recheneinheit, wie einer Steuerung, einem Computer, einem Netzwerk oder einer Cloud, sowie teilweise intern und teilweise extern erfolgen. Die konkrete Auswertung sowie deren Ziel kann sehr vielfältig sein, darauf kommt es zunächst nicht an, da die Erfindung sich auf das optische Hervorheben der Lage des Erfassungsbereichs bezieht.

Die Erfindung geht von dem Grundgedanken aus, das Lichtmuster aus mindestens zwei projizierten Teilmustern zusammenzusetzen. Ein jeweiliges Teilmuster entsteht aus einer eigenen Quelle, es geht nicht darum, Teilbereiche eines gemeinsam projizierten Lichtmusters als Teilmuster zu bezeichnen. Die Teilmuster können direkt von der Quelle erzeugt sein, beispielsweise einem Liniengenerator, oder es ist je Quelle beziehungsweise Teilmuster ein Mustererzeugungselement nachgeordnet, das einfach wie eine Zylinderlinse oder Schlitzblende, aber auch komplexer wie ein DOE (diffraktives optisches Element) ausgebildet sein kann. Die beiden Teilmuster markieren gemeinsam ein Zentrum des Erfassungsbereichs. Dabei bedeutet Markieren das visuelle Hervorheben oder Sichtbarmachen für das menschliche Auge. Die beiden Teilmuster markieren das Zentrum unabhängig von einem Abstand, in dem das projizierte Lichtmuster in dem Erfassungsbereich auf die Szenerie, ein Objekt oder den Hintergrund fällt.

Eine Quelle kann eine Lichtquelle sein, wie eine LED oder ein Laser, oder daraus beispielsweise durch Teilerspiegel abgeleitet sein. Die Quellen können nicht koaxial angeordnet werden, weil die optische Achse wie einleitend erwähnt bereits durch den Empfangspfad besetzt ist. Die optische Achse ist dabei diejenige des optoelektronischen Sensors beziehungsweise des Lichtempfangselements oder einer diesem zugeordneten Empfangsoptik. Der Erfindung gelingt es trotz des damit unvermeidlichen axialen Versatzes der Quellen zur optischen Achse des optoelektronischen Sensors, das Zentrum des Erfassungsbereichs abstandsunabhängig zu markieren und nicht beispielsweise nur in einem Fokusabstand.

Die Erfindung hat den Vorteil, dass das Zentrum des projizierten Lichtmusters abstandsunabhängig mit der optischen Achse zusammenfällt und somit abstandsunabhängig mit gleicher Genauigkeit und Verlässlichkeit erlaubt, auf die Lage des Erfassungsbereichs zu schließen. Entsprechende Quellen zur Erzeugung von Teilmustern, wie DOE-Musterprojektoren oder Laser-Linienprojektoren, sind in kleiner Baugröße zu geringen Kosten erhältlich. Dabei sind auch verschiedene Farben oder Wellenlängenbereiche möglich, um die Visualisierung weiter zu verbessern beziehungsweise das Lichtmuster in unterschiedlichen Szenarien deutlich visuell erkennbar abzusetzen. Der Aufbau des Sensors wird durch die erfindungsgemäße Anzeigeeinrichtung allenfalls unwesentlich aufwändiger als bei den einleitend beschriebenen bekannten Lösungen. Ein modularer Aufbau ist möglich, in dem die Anzeigeeinrichtung einfach in ein bestehendes Sensorkonzept beziehungsweise in dessen Beleuchtung eingefügt werden kann.

Das jeweilige Teilmuster ist in einer erfindungsgemäßen Alternative eine Linie, wobei die Linien in einem Winkel zueinander stehen, insbesondere senkrecht zueinander, und sich in dem Zentrum schneiden. Zwei zueinander senkrecht stehende Linien bilden etwas ähnliches wie ein Kreuz. Im Gegensatz zu einem projizierten Kreuz ist aber der Kreuzungspunkt nicht festgelegt und je nach Abstand, in denen die Teilmuster projiziert werden, gegenüber einer Mitte der Linien versetzt. Damit bleibt abstandsunabhängig das Zentrum des Erfassungsbereichs markiert, was bei einem projizierten Kreuz nicht der Fall wäre, das je nach AAbstand einen Versatz zum Zentrum bekommt. Das Prinzip, mit dem der Schnittpunkt der Linien das Zentrum abstandsunabhängig hervorhebt, ist bei zwei Linien in nicht senkrechtem Winkel oder mehr Linien, beispielsweise drei Linien im Winkelversatz von 120°, das gleiche. Die Linien sind in dieser Ausführungsform das tragende Element des jeweiligen Teilmusters, dadurch wird das Zentrum markiert. Dies schließt aber nicht aus, dass Teilmuster beziehungsweise Lichtmuster noch zusätzliche Elemente enthalten, beispielsweise ein Punktraster, um einen besseren Flächeneindruck zu vermitteln, oder zusätzliche Musterelemente aus welchen Gründen auch immer, die für das Markieren des Zentrums nicht erforderlich wären,.

Die Quellen sind bevorzugt in einer Umfangsrichtung um das Zentrum zueinander winketversetzt in einem von 0° und 180° verschiedenen Winkel angeordnet in dieser Ausführungsform liegen somit die Quellen nicht auf einem gemeinsamen Radius und auch nicht einem gemeinsamen Durchmesser durch das Zentrum. Im Falle von Linien als Teilmuster beispielsweise würde sich sonst aus den beiden Teilmuster insgesamt als Lichtmuster nur eine gemeinsame Linie ergeben, ohne erkennbaren Schnittpunkt im Zentrum. Ein Beispiel für einen Winkelversatz ungleich 0° und 180° sind zueinander um 90° versetzt angeordnete Quellen. Dabei müssen die Quellen nicht notwendig auf demselben Kreis um das Zentrum liegen, unterschiedliche radiale Abstände sind vorstellbar.

Ein jeweiliges Teilmuster markiert in einer weiteren erfindungsgemäßen Alternative sein eigenes Teilmusterzentrum, und somit ist das Zentrum als Mitte der Teilmusterzentren markiert. Mit dieser Ausführungsform kann ein zusätzlicher oder auch alleiniger visueller Hinweis auf das Zentrum gegeben werden. Für das menschliche Auge ist es einfach möglich, die Teilmusterzentren und dann auch deren Mitte als das gesuchte Zentrum des Erfassungsbereichs zu erkennen. Dabei kann das Zentrum im Lichtmuster bereits hervorgehoben sein, dann geben die Teilmusterzentren einen zusätzlichen Hinweis. Alternativ ist das Zentrum im Lichtmuster selbst nicht ausgezeichnet und wird vom Betrachter anhand der Mitte der Teilmusterzentren aufgefunden.

Dabei ist das jeweilige Teilmuster ein Kreuz oder eine Anordnung konzentrischer Kreise. Dies sind Beispiele für Teilmuster, die ihr eigenes Teilmusterzentrum markieren. Der Fall eines Kreuzes als Teilmuster darf nicht mit herkömmlichen Zieleinrichtungen verwechselt werden. Dort bezeichnet der Kreuzungspunkt das Zentrum, wobei aber bei außeraxialer Anordnung der Quelle ein Versatz zum tatsächlichen Zentrum besteht. In der hier erläuterten Ausführungsform hingegen bezeichnet der Kreuzungspunkt das Teilmusterzentrum, und das Zentrum des Erfassungsbereichs ist erst im zweiten Schritt die Mitte der Teilmusterzentren. Damit wird das Zentrum in jedem Abstand ohne Versatz hervorgehoben.

Die Teilmuster sind bevorzugt untereinander identisch. Dabei kann identisch insbesondere als kongruent und gleich groß verstanden werden. Das vereinfacht den Aufbau des Sensors und das Erkennen des Zentrums. Beispielsweise werden zwei Kreuze projiziert, das Zentrum liegt dann auf der Mitte der Kreuzungspunkte, oder es werden zwei Anordnungen konzentrischer Kreise projiziert, mit dem Zentrum auf der Mitte der Verbindung der Kreismittelpunkte.

Die Quellen sind bevorzugt zu beiden Seiten des Zentrums in gleichem Abstand zum Zentrum angeordnet In dieser Ausführungsform sind die Quellen nicht wie oben in einem Winkelversatz ungleich 0° und 180°, sondern abweichend doch auf einem gemeinsamen Durchmesser quasi rechts und links der optischen Achse beziehungsweise des Empfangspfades angeordnet. Das eignet sich insbesondere in Verbindung mit Teilmustern, die ihr eigenes Teilmusterzentrum markieren.

Die Quellen weisen bevorzugt jeweils eine Anzeigelichtquelle auf. Jedes Teilmuster entsteht somit aus einer eigenen Lichtquelle, wie einer LED oder Laserdiode, wobei die Lichtquelle beispielsweise für höhere Lichtstärke mehrere Einzellichtquellen aufweisen kann.

Mindestens eine Quelle koppelt bevorzugt mittels eines Strahlteilers Licht einer anderen Quelle aus. In dieser Ausführungsform weist nicht mehr jede Quelle eine eigene Lichtquelle auf. Zumindest zwei Quellen teilen sich eine gemeinsame Lichtquelle. Zusätzlich zu dem Strahlteiler kann es weitere optische Elemente geben, beispielsweise weitere Spiegel, um die Teilmuster an eine gewünschte Position und/oder in eine gewünschte Orientierung zu bringen.

Der Sensor weist bevorzugt eine Beleuchtungseinrichtung zum Ausleuchten des Erfassungsbereichs auf, wobei die Anzeigeeinrichtung Teil der Beleuchtungseinrichtung ist. Die Beleuchtungseinrichtung unterstützt die eigentliche Erfassung des Sensors. Häufig arbeitet die Beleuchtungseinrichtung in einem nicht sichtbaren Wellenlängenbereich, insbesondere im Infrarotbereich, beziehungsweise ist immer nur kurzzeitig aktiv. Damit eignet sich die Beleuchtungseinrichtung nicht, um den Erfassungsbereich visuell hervorzuheben, zumal sie auch kein Muster vorgibt, die dem menschlichen Auge die Bestimmung der Lage des Erfassungsbereichs vereinfachen würde. Die Anzeigeeinrichtung, insbesondere deren Anzeigelichtquellen, können aber in die Beleuchtungseinrichtung integriert werden. Insbesondere kann ein gemeinsames Beleuchtungs-/Anzeigemodul gebildet werden.

Die Beleuchtungseinrichtung weist bevorzugt eine Vielzahl über einen Umfang verteilter Lichtquellen auf, insbesondere kreisförmig verteilt, wobei Quellen der Anzeigeeinrichtung zwischen den über den Umfang verteilten Lichtquellen angeordnet sind. Die über den Umfang vorzugsweise mit der optischen Achse des Sensors im Mittelpunkt verteilten Lichtquellen sorgen dafür, dass der Erfassungsbereich entsprechend der optischen Achse ausgeleuchtet wird. Die Quellen der Anzeigeeinrichtung können in diesen Umfang eingestreut werden. Das ist zum einen eine geeignete Position zum Projizieren der Teilmuster und vereinfacht zum anderen den Gesamtaufbau. Es sind alternative Anordnungen der Lichtquellen der Beleuchtungseinrichtung vorstellbar, beispielsweise zu einer Matrix mit den Quellen an Matrixpositionen oder dazwischen.

Der Sensor ist bevorzugt als Kamera ausgebildet, wobei das Lichtempfangselement als Bildsensor mit einer Vielzahl von Pixelelementen zur Erzeugung von Bilddaten ausgebildet ist. Das Empfangssignal ist in diesem Fall ein jeweiliges aufgenommenes Bild oder ein Ausschnitt davon. Die Pixelelemente sind vorzugsweise zu einer Matrix angeordnet.

Der Sensor ist bevorzugt als Codelesevorrichtung zum Lesen von optischen Codes ausgebildet, wobei die Steuer- und Auswertungseinheit dafür ausgebildet ist, einen optischen Code durch Auswerten des Empfangssignals mit einem Decodierverfahren zu lesen. Die Codelesevorrichtung kann ein Barcodescanner oder ein kamerabasierter Codeleser sein.

Der Sensor ist bevorzugt stationär an einer Fördereinrichtung montiert, die zu erfassende Objekte in einer Förderrichtung durch den Erfassungsbereich führt. Das ist eine besonders häufige Anwendungssituation, insbesondere mit als Codelesern ausgebildeten Sensoren in einem Lesetunnel. Durch das erfindungsgemäße Markieren des Zentrums des Erfassungsbereichs wird die Ausrichtung des Sensors in seiner stationären Betriebsposition vereinfacht und verbessert.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines optoelektronischen Sensors;
- Fig. 2: eine beispielhafte Montage eines als Kamera ausgebildeten optoelektronischen Sensors an einer Fördereinrichtung;
- Fig. 3: eine Draufsicht auf eine Beleuchtungseinrichtung mit kreisförmiger Anordnung von Lichtquellen und zwei dort eingefügten Linienprojektoren;
- Fig. 4: eine Ansicht ähnlich Figur 3 nun mit drei Linienprojektoren;
- Fig. 5: die Ansicht der Figur 3 mit einem zusätzlichen Punktmuster;
- Fig. 6: eine Draufsicht auf eine Beleuchtungseinrichtung mit matrixförmiger Anordnung von Lichtquellen und zwei dort eingefügten Linienprojektoren;
- Fig. 7: eine schematische Ansicht eines als Kamera ausgebildeten optoelektronischen Sensors mit zwei seitlichen, achsparallelen Projektoren;
- Fig. 8: eine Ansicht ähnlich Figur 7 mit nur einem Projektor und zusätzlicher Auskopplung mittels Teilerspiegel;
- Fig. 9: zwei Kreuze als beispielhafte Teilmuster; und
- Fig. 10: zwei Anordnungen konzentrischer Kreise als beispielhafte Teilmuster.

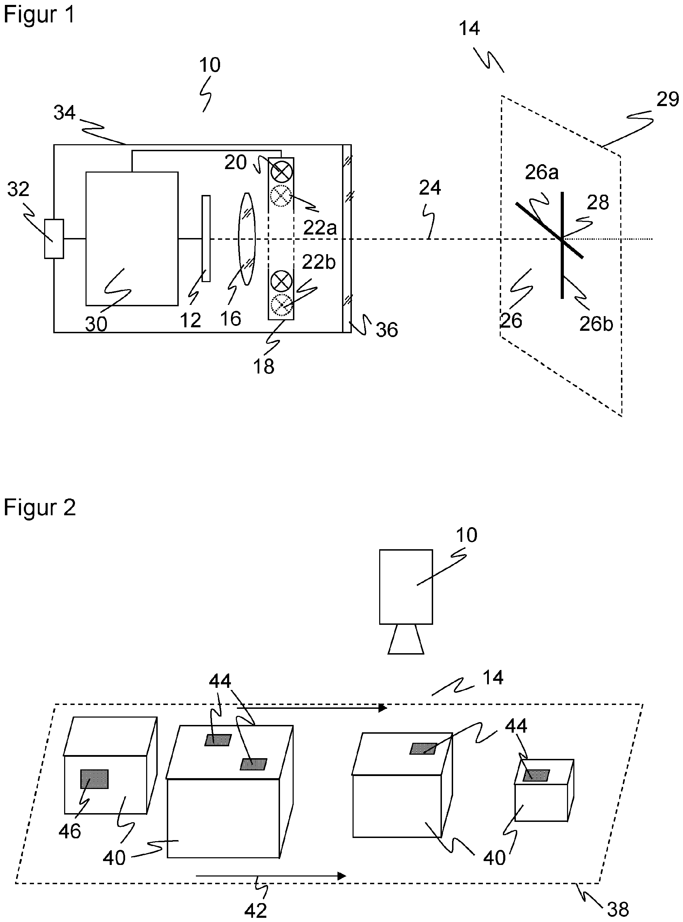

Figur 1 zeigt eine schematische Schnittdarstellung eines optoelektronischen Sensors 10, der hier beispielhaft als Kamera ausgebildet ist, insbesondere als kamerabasierter Codeleser. Ein Lichtempfangselement 12, insbesondere ein Bildsensor mit zu einer Matrix angeordneten Pixelelementen, erzeugt aus einfallendem Licht aus einem Erfassungsbereich ein Empfangssignal beziehungsweise Bilddaten. Dem Lichtempfangselement 12 ist eine Empfangsoptik 16 vorgeordnet, die vorzugsweise als Objektiv aus mehreren Linsen und anderen optischen Elementen wie Blenden, Prismen und dergleichen ausgestaltet, hier aber vereinfachend nur durch eine Linse repräsentiert ist.

Der Sensor 10 umfasst eine Beleuchtungseinheit 18 mit mehreren Lichtquellen 20, um den Erfassungsbereich 14 zu beleuchten. Zusätzlich sind in der Beleuchtungseinheit 18 zwei gestrichelt gezeichnete Anzeigelichtquellen 22a-b vorgesehen. Alternativ können die Anzeigelichtquellen 22a-b unabhängig von der Beleuchtungseinheit 18 sein. Lichtquellen 20 und Anzeigelichtquellen 22a-b können beispielsweise LEDs oder Laserdioden sein. Die geometrische Anordnung der Lichtquellen 20 und Anzeigelichtquellen 22a-b ist der rein schematischen Darstellung der Figur 1 nur unzureichend zu entnehmen. Sie sind beispielsweise kreisförmig um die optische Achse 24 der Sensors 10 angeordnet. Diese und weitere Anordnungen werden später gezeigt und diskutiert.

Die Anzeigelichtquellen 22a-b erzeugen gemeinsam in dem Erfassungsbereich 14 ein Lichtmuster 26, womöglich mit Hilfe eines jeweiligen nicht gezeigten Mustererzeugungselements. Das Lichtmuster 26 besteht aus mindestens zwei Teilmustern 26a-b, wobei jedes Teilmuster 26a-b von jeweils einer Anzeigelichtquelle 22a-b projiziert ist. Die beiden Teilmuster 26a-b markieren das Zentrum 28 des Erfassungsbereichs 14. Dies ist nun eine im Wesentlichen zweidimensionale Betrachtung in einer Ebene 29 des Erfassungsbereichs 14 in einem gegebenen Abstand. Das Lichtmuster 26 bildet sich in dieser Ebene 29 aus, weil sich hier ein Objekt oder ein Hintergrund wie beispielsweise eine Wand oder ein Förderband befindet.

Eine koaxiale Anordnung einer Anzeigelichtquelle 22a-b auf der optischen Achse 24 ist nicht möglich, weil damit der Empfangspfad des Lichtempfangselements 12 beziehungsweise der Empfangsoptik 16 abgeschattet würde. Obwohl die Anzeigelichtquellen 22a-b somit außeraxial, d.h. mit einem Versatz zu der optischen Achse 24 angeordnet sind, wird das Zentrum 28 unabhängig davon markiert, in welchem Abstand sich die Ebene 29 befindet. In dem in Figur 1 gezeigten Beispiel sind beide Teilmuster 26a-b jeweils eine Linie unterschiedlicher Orientierung, insbesondere senkrecht zueinander, so dass die Linien einander schneiden und mit ihrem Schnittpunkt das Zentrum 28 markieren. Das Kreuz aus beiden Linien ist je nach Abstand der Ebene 29 asymmetrisch verzogen, aber der Schnittpunkt bleibt im Zentrum 28. Damit ist die Position des Erfassungsbereichs 14 für einen menschlichen Betrachter anhand des Zentrums 28 in allen Abständen nachvollziehbar, beispielsweise um ein Objekt mittig in dem Erfassungsbereich 14 zu platzieren oder um eine Montageposition und Ausrichtung des Sensors 10 zu kontrollieren beziehungsweise zu justieren.

Eine Steuer- und Auswertungseinheit 30, die mindestens einen digitalen Rechenbaustein aufweist, ist mit dem Lichtempfangselement 12 und der Beleuchtungseinheit 18 verbunden und für die Steuerungs-, Auswertungs- und sonstigen Koordinierungsaufgaben in dem Sensor 10 zuständig. Sie erzeugt bei Bedarf das Lichtmuster 26, beleuchtet den Erfassungsbereich 14, nimmt das Empfangssignal beziehungsweise Bilder auf und wertet das Empfangssignal beziehungsweise die Bilddaten aus. In einer Ausführungsform als Codeleser werden mit dem Empfangssignal oder den Bilddaten erfasste optische Codes gelesen. Dafür erfolgt vorzugsweise in an sich bekannter Weise eine Segmentierung zum Auffinden von Codebereichen, und die Codebereiche werden mindestens einem Decoder zugeführt. Gelesene Codes, optional auch Rohdaten oder Vorverarbeitungsergebnisse, können gespeichert beziehungsweise an einer Schnittstelle 32 ausgegeben werden. Für die verschiedenen Steuer- und Auswertungsaufgaben können mehrere Bausteine vorgesehen sein, beispielsweise um Vorverarbeitungen der Bilddaten auf einem separaten FPGA und die eigentliche Auswertung mittels eines Mikroprozessors durchzuführen. Zumindest Teile der Steuer- und Auswertungseinheit 30 können auch extern vorgesehen sein.

Die Schnittstelle 32 oder eine weitere Schnittstelle kann genutzt werden, um von extern die Anzeigelichtquellen 22a-b zu aktivieren und zu deaktivieren. Abweichend von Figur 1 kann die Beleuchtungseinheit 18 und/oder eine Einheit mit den Anzeigelichtquellen 22a-b ein externes Teil mit entsprechenden Anschlüssen zum Aktivieren der Beleuchtung beziehungsweise des Lichtmusters 26 sein. Auf eine separate Ansteuerung der Anzeigelichtquellen 22a-b kann aber auch verzichtet werden, beispielsweise indem sich die Anzeigelichtquellen 22a-b automatisch deaktivieren, wenn die Beleuchtung aktiv ist, um die eigentliche Erfassung im Betrieb nicht zu stören.

Der Sensor 10 wird durch ein Gehäuse 34 geschützt, das im vorderen Bereich, wo Licht ein- und austritt, durch eine Frontscheibe 36 abgeschlossen ist. Der gezeigte konstruktive Aufbau ist rein beispielhaft zu verstehen.

Figur 2 zeigt eine beispielhafte Montage eines als Kamera ausgebildeten optoelektronischen Sensors 10 an einer Fördereinrichtung beziehungsweise einem Förderband 38. Der Sensor 10 ist hier nur noch als Symbol und nicht mehr mit seinem bereits anhand der Figur 1 erläuterten Aufbau gezeigt. Das Förderband 38 fördert Objekte 40, wie durch den Pfeil 42 angedeutet, durch den Erfassungsbereich 14. Die Objekte 40 tragen in einem Anwendungsbeispiel an ihren Außenflächen Codebereiche 44. Aufgabe des Sensors 10 ist in diesem Anwendungsbeispiel, die Codebereiche 44 zu erkennen, die dort angebrachten Codes auszulesen, zu dekodieren und dem jeweils zugehörigen Objekt 40 zuzuordnen. Um auch seitlich angebrachte Codebereiche 46 zu erfassen, werden vorzugsweise zusätzliche, nicht dargestellte Sensoren 10 aus unterschiedlicher Perspektive eingesetzt. Außerdem können mehrere Sensoren 10 nebeneinander angeordnet werden, um gemeinsam einen breiteren Erfassungsbereich 14 abzudecken. Figur 2 ist ein Anwendungsbeispiel, weder ist die Erfindung auf eine Montageposition an einem Förderband 38 noch die Funktion des Sensors 10 auf das Codelesen beschränkt. Beispielsweise können andere Objekteigenschaften erfasst werden, wie Objektgeometrien und -größen, bestimmte Qualitätsmerkmale, und dies auch in Anwendungssituationen, in denen das jeweilige Objekt auf andere Weise in den Erfassungsbereich 14 gelangt als mittels Förderband 38, insbesondere durch manuelle Präsentation.

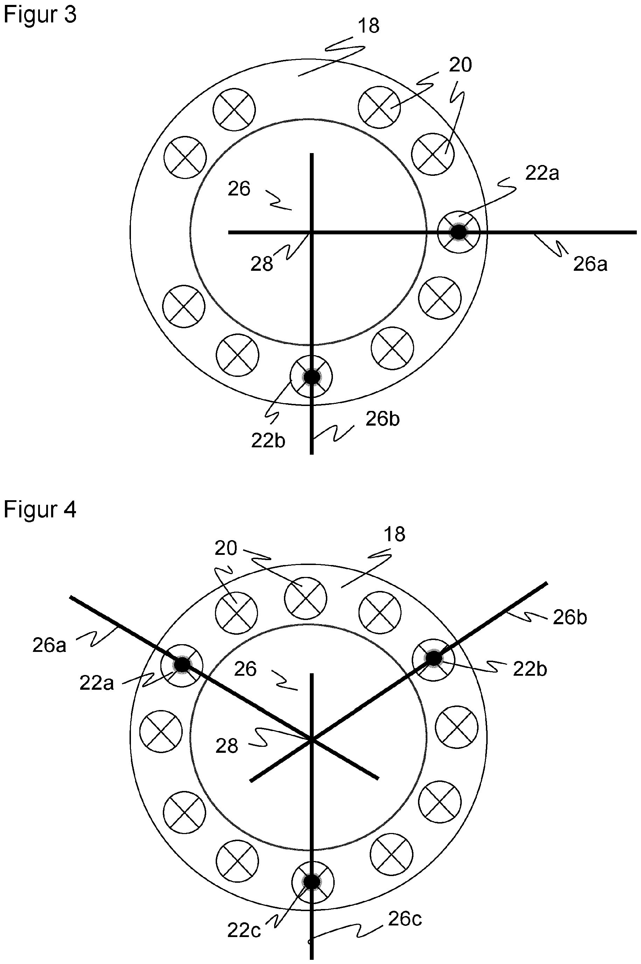

Figur 3 zeigt eine Draufsicht auf die Beleuchtungseinrichtung 18 bei einer beispielhaften kreis- oder ringförmigen Anordnung der Lichtquellen 20 und der beiden dort eingefügten Anzeigelichtquellen 22a-b, die hier als Linienprojektoren ausgebildet sind. Die Betrachtungsrichtung ist hier längs der optischen Achse 24, so dass einige geometrischen Verhältnisse ergänzend zu Figur 1 besser erkennbar werden. Die beiden Anzeigelichtquellen 22a-b erzeugen jeweils eine radial zur optischen Achse 24 verlaufende Linie als Teilmuster 26a-b des Lichtmusters 26, und das Zentrum 28 des Erfassungsbereichs 14 wird als Schnittpunkt der Linien markiert. In einer Kamera als optoelektronischer Sensor 10 liegt bei üblicher mittiger Anordnung des dann als Bildsensor ausgebildeten Lichtempfangselements 12 das Zentrum 28 in der Bildmitte.

Das Zentrum 28 wird dabei abstandsunabhängig markiert. Fällt das Lichtmuster 26 auf ein näheres oder ferneres Objekt, so verschieben beziehungsweise verlängern oder verkürzen sich die horizontale Linie des Teilmusters 26a in ihrer horizontalen Linienrichtung und die vertikale Linie des Teilmusters 26b in ihrer vertikalen Linienrichtung. Das ändert aber nichts an der Position des Schnittpunkts im Zentrum 28.

Figur 4 zeigt eine Ansicht ähnlich Figur 3 nun mit drei Anzeigelichtquellen 22a-c beziehungsweise Linienprojektoren und dementsprechend drei Linien als Teillichtmuster 26a-c. Damit soll zum einen illustriert werden, dass ein abstandsunabhängiges Markieren des Zentrums 28 mit mehr als zwei Teilmustern 26a-c und/oder mit nicht zueinander senkrechten Linien möglich ist. Zum anderen entsteht auf diese Weise ein insgesamt zur optischen Achse 24 rotationssymmetrisches Lichtmuster 26, das im Zusammenspiel mit den Lichtquellen 20 der Beleuchtungseinheit 18 sowie hinsichtlich der Sichtbarkeit Vorteile haben kann.

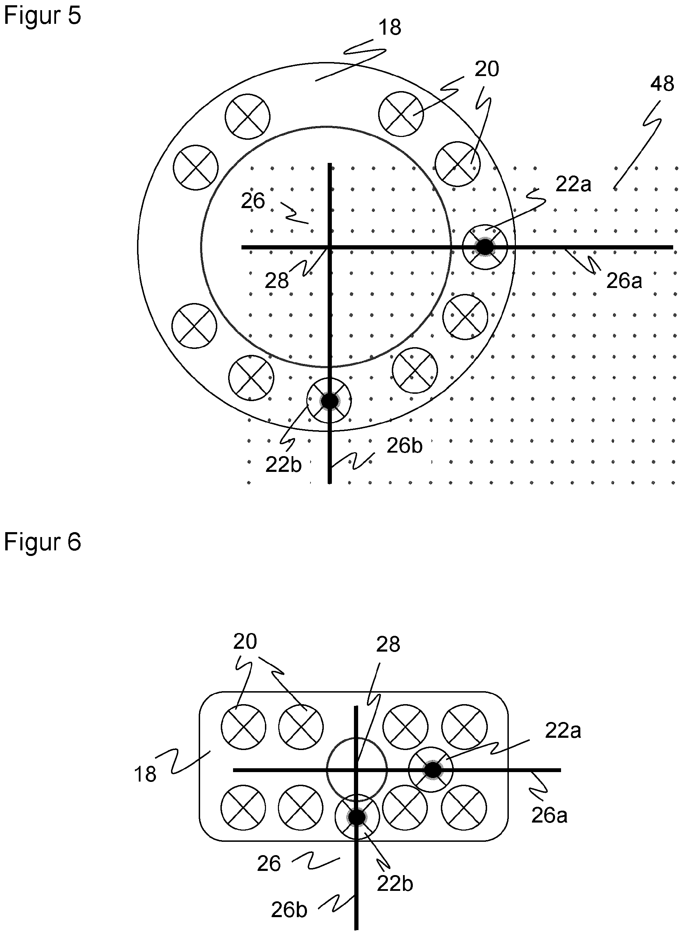

Figur 5 zeigt die Ansicht der Figur 3 mit einem zusätzlichen Punktmuster 48 zur weiteren Illustration möglicher Ausführungsformen. Das erfindungsgemäße Prinzip, das Zentrum 28 abstandsunabhängig mit Teillichtmustern 26a-b zu markieren, lässt zusätzliche Musterelemente zu, wie das rein beispielhaft dargestellte Punktmuster 48. Solche Musterelemente können die Visualisierung der Position des Erfassungsbereichs 14 unterstützen, aber auch ganz anderen Zwecken dienen, beispielsweise Sensorinformationen einblenden.

Figur 6 zeigt eine Draufsicht auf eine Beleuchtungseinrichtung 18 nun mit rechteckiger oder matrixförmiger Anordnung von Lichtquellen 20 und zwei dort an Matrixpositionen beziehungsweise zwischen Matrixpositionen eingefügten Anzeigelichtquellen 22a-b, hier erneut in Form von Linienprojektoren. Das abstandsunabhängige Markieren des Zentrums 28 mit Teilmustern 26a-b hängt nicht von der Ausgestaltung der Beleuchtungseinrichtung 18 ab und kann mit verschiedensten Beleuchtungseinrichtungen 18 kombiniert werden.

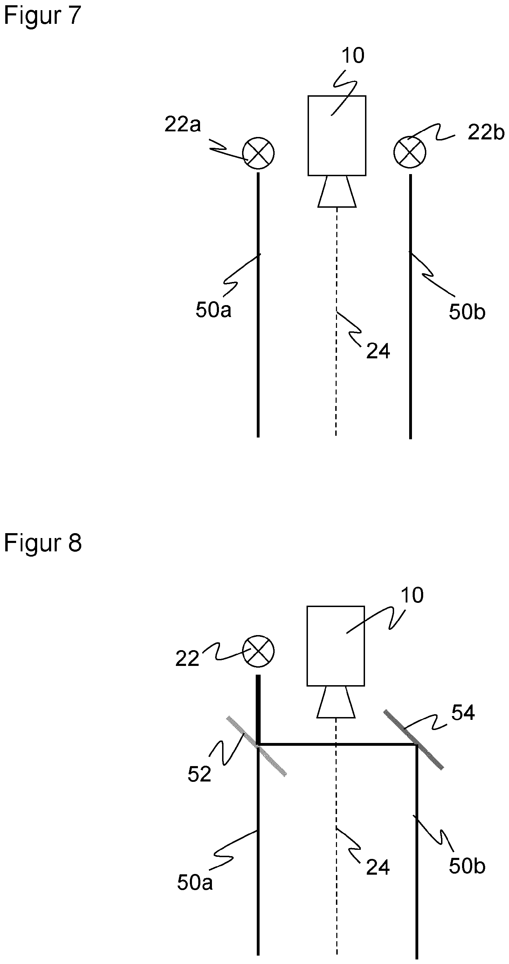

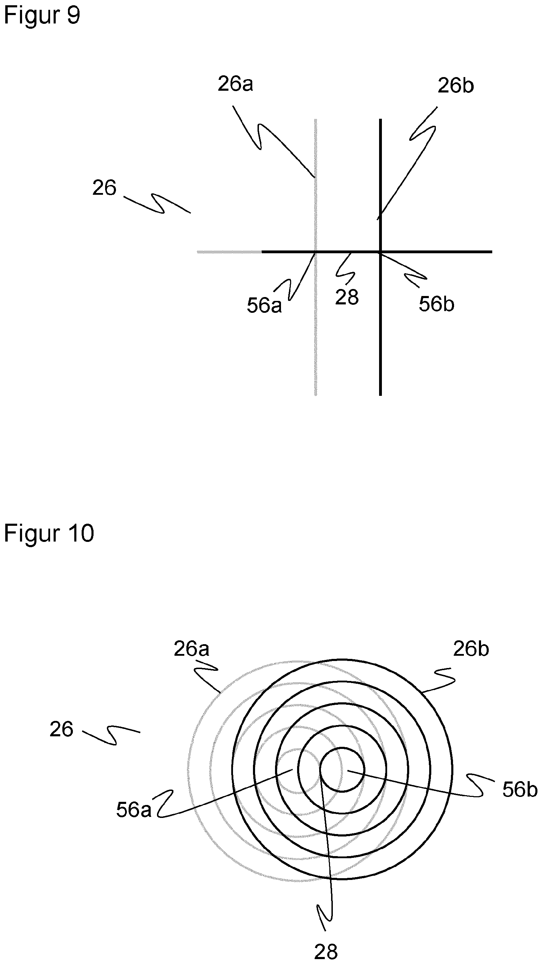

Figur 7 zeigt eine schematische Ansicht eines als Kamera ausgebildeten optoelektronischen Sensors 10 mit zwei seitlichen Anzeigelichtquellen 22a-b. Die jeweilige Projektionsrichtung 50a-b ist parallel zur optischen Achse 24, so dass achsparallele Projektoren gebildet sind. Alternativ wäre eine Neigung zur optischen Achse 24 auch vorstellbar. In einer solchen Ausführungsform mit Anzeigelichtquellen 22a-b symmetrisch zu beiden Seiten der optischen Achse 24 werden vorzugsweise etwas komplexere Teilmuster 26a-b verwendet, die sogleich unter Bezugnahme auf die Figuren 9 und 10 diskutiert werden. Dazu sind vorzugsweise den Anzeigelichtquellen 22a-b nicht gezeigte Mustererzeugungselemente nachgeordnet, beispielsweise jeweils ein DOE (diffraktives optisches Element), wobei solche Mustererzeugungselemente auch in den früheren Ausführungsformen zum Einsatz kommen können, insbesondere um Linien zu erzeugen.

Vor der Diskussion weiterer geeigneter Teilmuster 26a-b zeigt noch Figur 8 eine Ansicht ähnlich Figur 7 als Alternative mit nur einer Anzeigelichtquelle 22. Während bisher die Quellen, von denen die Projektion eines jeweiligen Teilmusters 26a-b ausgeht, jeweils eine eigene Anzeigelichtquelle 22a-b nutzten, entsteht nun stattdessen eine Quelle durch Auskopplung mittels eines Teilerspiegels oder Strahlteilers 52. Die Anzeigelichtquelle 22 wird dadurch effektiv zu zwei Quellen verdoppelt. Falls ein Mustererzeugungselement eingesetzt ist, erfolgt die Auskopplung vorzugsweise dahinter, so dass nicht nur Licht, sondern sogar entsprechend dem Teilmuster 26a-b moduliertes oder geformtes Licht ausgekoppelt wird. Dadurch entstehen zwei Teilmuster 26a-b aus demselben physischen Projektor. Der Lichtweg nach der ausgekoppelten Quelle kann durch weitere optische Elemente noch ein- oder mehrmals neu ausgerichtet werden, wie in Figur 8 beispielshaft mittels eines Spiegels 54. Prinzipiell wären weitere Auskopplungen denkbar, um zusätzliche Quellen zu erschaffen. Und obwohl die Erzeugung zusätzlicher Quellen im Zusammenhang mit einer symmetrischen achsparallelen Anordnung erläutert wurde, ist dies auch für die oben unter Bezugnahme auf die Figuren 3 bis 6 erläuterten Ausführungsformen denkbar. Überall in dieser Beschreibung, wo mehrere Anzeigelichtquellen 22a-b beschrieben sind, kann mindestens eine Anzeigelichtquelle 22a-b durch eine Auskopplung ersetzt werden.

Figur 9 zeigt ein Beispiel für Teilmuster 26a-b, die sich insbesondere im Zusammenhang mit den achsparallelen Projektoren der Figuren 7 und 8 eigenen, um das Zentrum 28 zu markieren. Die Teilmuster 26a-b sind hier schon für sich Kreuze, so dass das jeweilige Teilmusterzentrum 56a-b sofort erkannt wird. Allerdings fallen die Teilmusterzentren 56a-b wegen des außeraxialen Versatzes der zugehörigen Anzeigelichtquellen 22a-b noch keineswegs abstandsunabhängig mit dem Zentrum 28 zusammen. Vielmehr ist das Zentrum 28 dadurch markiert, dass es in der Mitte zwischen den beiden Teilmusterzentren 56a-b liegt. Diese Mitte und damit das Zentrum 28 sind für das menschliche Auge ebenfalls sofort erkennbar, und die Lage der Mitte ist abstandsunabhängig.

Figur 10 zeigt ein alternatives Beispiel für Teilmuster 26a-b, nun mit Anordnungen konzentrischer Kreise statt Kreuzen. Die Teilmusterzentren 56a-b sind als Mittelpunkt der Kreise sofort erkennbar, damit ebenfalls die Mitte der Teilmusterzentren 56a-b und folglich das Zentrum 28.

## Patentansprüche

1. Optoelektronischer Sensor (10) zur Erfassung von Objekten in einem Erfassungsbereich (14), der ein Lichtempfangselement (12) zum Erzeugen eines Empfangssignals aus Licht, das aus dem Erfassungsbereich (14) auf das Lichtempfangselement (12) fällt, eine Anzeigeeinrichtung (22a-b) zum Hervorheben der Lage des Erfassungsbereichs (14) für das menschliche Auge durch ein in den Erfassungsbereich (14) projiziertes Lichtmuster (26) sowie eine Steuer- und Auswertungseinheit (30) zum Auswerten des Empfangssignals aufweist, wobei das Lichtmuster (26) mindestens zwei aus verschiedenen Quellen (22a-b, 52, 54) projizierte Teilmuster (26a-b) aufweist, die gemeinsam ein Zentrum (28) des Erfassungsbereichs (14) markieren, unabhängig von einem Abstand, in den das Lichtmuster (26) in den Erfassungsbereich (14) projiziert ist,
**dadurch gekennzeichnet,**
**dass** das jeweilige Teilmuster (26a-b) eine Linie ist, die Linien in einem Winkel zueinander stehen, insbesondere senkrecht zueinander, und sich in dem Zentrum (28) schneiden, oder dass das jeweilige Teilmuster (26a-b) ein Kreuz oder eine Anordnung konzentrischer Kreise ist, so dass ein jeweiliges Teilmuster (26a-b) sein eigenes Teilmusterzentrum (56a-b) markiert und somit das Zentrum (28) als Mitte der Teilmusterzentren (56a-b) markiert ist.

2. Sensor (10) nach Anspruch 1,
wobei die Teilmuster (26a-b) untereinander identisch sind.

3. Sensor (10) nach Anspruch 1 oder 2,
wobei die Quellen (22a-b, 52, 54) zu beiden Seiten des Zentrums (24, 28) in gleichem Abstand zum Zentrum (24, 28) angeordnet sind.

4. Sensor (10) nach einem der vorhergehenden Ansprüche,
wobei die Quellen (22a-b, 52, 54) jeweils eine Anzeigelichtquelle (22a-b) aufweisen.

5. Sensor (10) nach einem der Ansprüche 1 bis 3,
wobei mindestens eine Quelle (22a-b, 52, 54) mittels eines Strahlteilers (52) Licht einer anderen Quelle (22a-b, 52, 54) auskoppelt.

6. Sensor (10) nach einem der vorhergehenden Ansprüche,
der eine Beleuchtungseinrichtung (18) zum Ausleuchten des Erfassungsbereichs (14) aufweist und wobei die Anzeigeeinrichtung (22a-b) Teil der Beleuchtungseinrichtung (18) ist.

7. Sensor (10) nach Anspruch 6,
wobei die Beleuchtungseinrichtung (18) eine Vielzahl über einen Umfang verteilter Lichtquellen (20) aufweist, insbesondere kreisförmig verteilt, und wobei Quellen (22a-b) der Anzeigeeinrichtung (22a-b) zwischen den über den Umfang verteilten Lichtquellen (22) angeordnet sind.

8. Sensor (10) nach einem der vorhergehenden Ansprüche,
der als Kamera ausgebildet ist, wobei das Lichtempfangselement (12) als Bildsensor mit einer Vielzahl von Pixelelementen zur Erzeugung von Bilddaten ausgebildet ist.

9. Sensor (10) nach einem der vorhergehenden Ansprüche,
der als Codelesevorrichtung zum Lesen von optischen Codes (44) ausgebildet ist, wobei die Steuer- und Auswertungseinheit (30) dafür ausgebildet ist, einen optischen Code (44) durch Auswerten des Empfangssignals mit einem Decodierverfahren zu lesen.

10. Sensor (10) nach einem der vorhergehenden Ansprüche,
der stationär an einer Fördereinrichtung (38) montiert ist, die zu erfassende Objekte (40) in einer Förderrichtung (42) durch den Erfassungsbereich (14) führt.

11. Verfahren zum Hervorheben der Lage eines Erfassungsbereichs (14) eines optoelektronischen Sensors (10), insbesondere eines Sensor (10) nach einem der vorhergehenden Ansprüche, bei dem ein für das menschliche Auge sichtbares Lichtmuster (26) in den Erfassungsbereich (14) projiziert wird, wobei aus mindestens zwei verschiedenen Quellen (22a-b, 52, 54) mindestens zwei Teilmuster (26a-b) des Lichtmusters (26) projiziert werden, die gemeinsam ein Zentrum (28) des Erfassungsbereichs (14) markieren, unabhängig von einem Abstand, in den das Lichtmuster (26) in den Erfassungsbereich (14) projiziert wird,
**dadurch gekennzeichnet,**
**dass** das jeweilige Teilmuster (26a-b) eine Linie ist, die Linien in einem Winkel zueinander stehen, insbesondere senkrecht zueinander, und sich in dem Zentrum (28) schneiden, oder dass das jeweilige Teilmuster (26a-b) ein Kreuz oder eine Anordnung konzentrischer Kreise ist, so dass ein jeweiliges Teilmuster (26a-b) sein eigenes Teilmusterzentrum (56a-b) markiert und somit das Zentrum (28) als Mitte der Teilmusterzentren (56a-b) markiert wird.

## Claims

1. An optoelectronic sensor (10) for detecting objects in a detection area (14), comprising a light-receiving element (12) for generating a received signal from light incident on the light-receiving element (12) from the detection area (14), a display device (22a-b) for highlighting the position of the detection area (14) for the human eye by means of a light pattern (26) projected into the detection area (14), and a control and evaluation unit (30) for evaluating the received signal, the light pattern (26) having at least two partial patterns (26a-b) projected from different sources (22a-b, 52, 54), which together mark a center (28) of the detection area (14), irrespective of a distance at which the light pattern (26) is projected into the detection area (14),
**characterized in that** the respective partial pattern (26a-b) is a line, the lines being at an angle to one another, in particular perpendicular to one another, and intersecting in the center (28), or **in that** the respective partial pattern (26a-b) is a cross or an arrangement of concentric circles, so that a respective partial pattern (26a-b) marks its own partial pattern center (56a-b) and thus the center (28) is marked as the center of the partial pattern centers (56a-b).

2. The sensor (10) according to claim 1,
wherein the partial patterns (26a-b) are identical to one another.

3. The sensor (10) according to claim 1 or 2,
wherein the sources (22a-b, 52, 54) are arranged on both sides of the center (24, 28) at the same distance from the center (24, 28).

4. The sensor (10) according to any of the preceding claims,
wherein the sources (22a-b, 52, 54) each comprise an indicator light source (22a-b).

5. The sensor (10) according to any of claims 1 to 3,
wherein at least one source (22a-b, 52, 54) couples out light from another source (22a-b, 52, 54) by means of a beam splitter (52).

6. The sensor (10) according to any of the preceding claims,
comprising an illumination device (18) for illuminating the detection area (14) and wherein the display device (22a-b) is part of the illumination device (18).

7. The sensor (10) according to claim 6,
wherein the illumination device (18) comprises a plurality of light sources (20) distributed over a circumference, in particular distributed in a circular manner, and wherein sources (22a-b) of the display device (22a-b) are arranged between the light sources (22) distributed over the circumference.

8. The sensor (10) according to any of the preceding claims,
which is configured as a camera, wherein the light-receiving element (12) is configured as an image sensor with a plurality of pixel elements for generating image data.

9. The sensor (10) according to any of the preceding claims,
which is configured as a code reading device for reading optical codes (44), wherein the control and evaluation unit (30) is configured to read an optical code (44) by evaluating the received signal using a decoding method.

10. The sensor (10) according to any of the preceding claims,
which is stationarily mounted on a conveyor device (38) that guides objects (40) to be detected in a conveying direction (42) through the detection area (14).

11. A method for highlighting the position of a detection area (14) of an optoelectronic sensor (10), in particular of a sensor (10) according to any of the preceding claims, wherein a light pattern (26) visible to the human eye is projected into the detection area (14), at least two partial patterns (26a-b) of the light pattern (26) are projected from at least two different sources (22a-b, 52, 54) that together mark a center (28) of the detection area (14), irrespective of a distance at which the light pattern (26) is projected into the detection area (14), **characterized in that** the respective partial pattern (26a-b) is a line, the lines being at an angle to one another, in particular perpendicular to one another, and intersecting in the center (28), or **in that** the respective partial pattern (26a-b) is a cross or an arrangement of concentric circles, so that a respective partial pattern (26a-b) marks its own partial pattern center (56a-b) and thus the center (28) is marked as the center of the partial pattern centers (56a-b).

## Revendications

1. Capteur optoélectronique (10) pour la détection d'objets dans une zone de détection (14), comprenant un élément de réception de lumière (12) pour générer un signal de réception à partir de la lumière qui tombe de la zone de détection (14) sur l'élément de réception de lumière (12), un dispositif d'affichage (22a-b) pour mettre en évidence la position de la zone de détection (14) pour l'œil humain par un motif lumineux (26) projeté dans la zone de détection (14), ainsi qu'une unité de commande et d'évaluation (30) pour évaluer le signal de réception, le motif lumineux (26) présentant au moins deux motifs partiels (26a-b) projetés à partir de différentes sources (22a-b, 52, 54), qui marquent ensemble un centre (28) de la zone de détection (14), indépendamment d'une distance à laquelle le motif lumineux (26) est projeté dans la zone de détection (14),
**caractérisé en ce que**
le motif partiel respectif (26a-b) est une ligne, les lignes forment un angle l'une par rapport à l'autre, en particulier sont perpendiculaires l'une à l'autre, et se coupent au centre (28), ou
**en ce que** le motif partiel respectif (26a-b) est une croix ou un ensemble de cercles concentriques, de sorte qu'un motif partiel respectif (26a-b) marque son propre centre de motif partiel (56a-b) et marque ainsi le centre (28) comme milieu des centres de motif partiel (56a-b).

2. Capteur (10) selon la revendication 1,
dans lequel les motifs partiels (26a-b) sont identiques entre eux.

3. Capteur (10) selon la revendication 1 ou 2,
dans lequel les sources (22a-b, 52, 54) sont disposées de part et d'autre du centre (24, 28) à égale distance du centre (24, 28).

4. Capteur (10) selon l'une des revendications précédentes,
dans lequel les sources (22a-b, 52, 54) comprennent chacune une source lumineuse d'affichage (22a-b).

5. Capteur (10) selon l'une des revendications 1 à 3,
dans lequel au moins une source (22a-b, 52, 54) extrait la lumière d'une autre source (22a-b, 52, 54) au moyen d'un diviseur de faisceau (52).

6. Capteur (10) selon l'une des revendications précédentes,
comprenant un dispositif d'éclairage (18) pour éclairer la zone de détection (14), le dispositif d'affichage (22a-b) faisant partie du dispositif d'éclairage (18).

7. Capteur (10) selon la revendication 6,
dans lequel le dispositif d'éclairage (18) comprend une pluralité de sources lumineuses (20) réparties sur une périphérie, en particulier réparties de manière circulaire, et
des sources (22a-b) du dispositif d'affichage (22a-b) sont disposées entre les sources lumineuses (22) réparties sur la périphérie.

8. Capteur (10) selon l'une des revendications précédentes,
qui est conçu comme une caméra, l'élément de réception de lumière (12) étant conçu comme un capteur d'images avec une pluralité d'éléments de pixels pour générer des données d'image.

9. Capteur (10) selon l'une des revendications précédentes,
qui est conçu comme un dispositif de lecture de code pour lire des codes optiques (44), l'unité de commande et d'évaluation (30) étant conçue pour lire un code optique (44) en évaluant le signal de réception par un procédé de décodage.

10. Capteur (10) selon l'une des revendications précédentes,
qui est monté de manière stationnaire sur un dispositif de transport (38) qui achemine les objets (40) à détecter dans une direction de transport (42) à travers la zone de détection (14).

11. Procédé de mise en évidence de la position d'une zone de détection (14) d'un capteur optoélectronique (10), en particulier d'un capteur (10) selon l'une des revendications précédentes,
dans lequel un motif lumineux (26) visible par l'œil humain est projeté dans la zone de détection (14),
au moins deux motifs partiels (26a-b) du motif lumineux (26) sont projetés à partir d'au moins deux sources différentes (22a-b, 52, 54), lesquels marquent ensemble un centre (28) de la zone de détection (14), indépendamment d'une distance à laquelle le motif lumineux (26) est projeté dans la zone de détection (14),
**caractérisé en ce que**
le motif partiel respectif (26a-b) est une ligne, les lignes forment un angle l'une par rapport à l'autre, en particulier sont perpendiculaires l'une à l'autre, et se coupent au centre (28), ou
**en ce que** le motif partiel respectif (26a-b) est une croix ou un ensemble de cercles concentriques, de sorte qu'un motif partiel respectif (26a-b) marque son propre centre de motif partiel (56a-b) et marque ainsi le centre (28) comme milieu des centres de motif partiel (56a-b).
